# EUROPEAN PATENT SPECIFICATION

(11) **EP 2 072 471 B1**
(45) Date of publication and mention of the grant of the patent: **20.05.2015**
(21) Application number: 08172095.5
(22) Date of filing: 18.12.2008
(51) Int. Cl.: C02F 1/467

(54) **Sterilization method, sterilizer and air conditioner, hand drier, and humidifier using the sterilizer**
Sterilisationsverfahren, Sterilisator und Klimaanlage, Handtrockner und -befeuchter unter Verwendung des Sterilisators
Procédé de stérilisation, stérilisateur et climatiseur, séchoir à mains et humidificateur utilisant le stérilisateur

(30) Priority: 20.12.2007 JP 2007328675; 18.03.2008 JP 2008069470; 20.08.2008 JP 2008211635
(43) Date of publication of application: 24.06.2009
(73) Proprietor: MITSUBISHI ELECTRIC CORPORATION, Chiyoda-ku Tokyo 100-8310 (JP)
(72) Inventor: Nomura, Akane, Tokyo Tokyo 100-8310 (JP); Noda, Seiji, Tokyo Tokyo 100-8310 (JP); Tanimura, Yasuhiro, Tokyo Tokyo 100-8310 (JP)
(74) Representative: Popp, Eugen

(56) References cited:
- DE-A1- 2 907 887
- JP-A- 2005 058 887
- JP-A- 2007 207 540
- US-A1- 2002 014 400
- US-A1- 2004 022 669

## Description

### BACKGROUND OF THE INVENTION

### 1. Field of the Invention

The present invention relates to a sterilization method and a sterilizer of which a treating subject is a contaminated water and the like, and an air conditioner, hand drier and humidifier using the sterilizer.

### 2. Description of the Related Art

In recent years, drainage treatment apparatuses and drainage treatment methods utilizing a high voltage pulse and the like have been known. The apparatuses and the methods are characterized by treating drainage by performing separation between water molecules and floating molecules, aggregation, decoloration, sterilization and chemical substance decomposition with the use of the high voltage pulse to a water surface or in a water. As a related art, a drainage treatment apparatus described in JP-A-2001-252665 proposes to perform a drainage treatment such as separation and aggregation by disposing a high voltage pulse applying electrode and a counter electrode with closely spacing of 1 to 10 cm, generating discharge by way of a short between the electrodes caused by applying a high voltage pulse of 10 to 15 kV or more to the applying electrode for 50 ns or more, for example, and utilizing a shock wave caused by the discharge for the drainage treatment.

Further, bubbles are generated in the drainage by the drainage electrolysis. Due to the bubbles, active species such as OH radical are generated, and the bubbles act as the electrodes to promote the inter-electrode short, thereby causing generation of a shock wave by way of the rapid volumetric expansion due to water evaporation. Thus, it is possible to perform the separation between water molecules and floating molecules, aggregation, decoloration and sterilization/chemical substance decomposition by the series of operations.

However, with the related-art drainage treatment apparatuses and methods using the high voltage pulse discharge, the drainage treatment is performed by utilizing the shock wave caused by the rapid volumetric expansion due to the water evaporation using plasma generation in the bubbles generated by the electrolysis. Therefore, though it is possible to efficiently perform the separation and aggregation of water molecules and floating molecules, there has been a problem that the sterilization efficiency is not high since the generated plasma does not directly act on microorganisms for the sterilization. Also, since the sterilization is promoted locally at the part where the discharge is generated with the related-art methods, there has been a problem that a satisfactory sterilization effect is not achieved on the whole drainage when the drainage is stagnant.

Further information pertaining to the prior art can be found in JP 2007 207540 that address the problem of providing an in-liquid plasma generation method and apparatus for generating plasma in a bubble formed in a liquid and permeating and diffusing active ion species into a liquid. For addressing this problem, this document teaches that, in the in-liquid plasma generation method and the in-liquid plasma generation apparatus, a pair of electrodes at least one of which consists of a high voltage electrode having a high voltage insulating part and at least one projection part is immersed in liquid, a high voltage pulse is applied at a high repetition rate between these electrodes to Joule-heat the liquid adjacent to the high voltage electrode and continuously or intermittently to boil and evaporate the liquid, the evaporation bubbles form an evaporation bubble region surrounding at least a projection part tip of the high voltage electrode, evaporation objects in the bubbles is ionized (turned to plasma) by high voltage dielectric breakdown discharge in the evaporation bubbles by the high voltage pulse to form various kinds of ions, and the ion species in the plasma is permeated and diffused into the liquid.

US patent application publication 2002/0014400 provides an apparatus suitable for use in the treatment of liquid, comprising a high voltage electric discharge device with spaced apart first second electrodes. The discharge device has electrical power supply control means for applying a series of high voltage pulses across said first and second electrodes so as to produce an extended area electrical discharge in an electric discharge zone extending between said first and second electrodes. The apparatus also has a gas delivery means for feeding a series of bubbles of gas into the liquid in said electric discharge zone. This publication also teaches methods of producing an electrical discharge in a liquid and of decontaminating water and other liquids using the apparatus.

DE 29 07 887 teaches a method for obtaining single phases from disperse systems.

JP 2005 058887 addresses the problem of providing a wastewater treatment apparatus using a high-voltage pulse which can treat organic substances at high removal rates in a short time even in the case of wastewater containing a high concentration of the organic substances, and enables a high-efficiency treatment by improving a reaction efficiency in a decomposition reaction regions of the organic substances. This document addresses this problem by teaching that, in the waste water treatment apparatus, a treatment tank having a cathode nozzle connected to a high-voltage pulse power source is installed, the cathode nozzle is covered with an insulator so that its tip end is exposed, gas is supplied between the cathode nozzle and an anode while applying the high-voltage pulse between them to generate bubble discharge in the waste water, and the organic substances are decomposed and removed by oxidative radicals produced in the waste water. The cathode nozzle has a double pipe structure provided with a gas passage guide, and is structured so that the gas flows through its outer periphery-side space. A mesh for gas flow straightening is installed in a gas passage, and a rotating flow generation nozzle is equipped for liquid innovation.

US patent application publication 2004/0022669 provides a method and apparatus for at least partially disinfecting biological fluid of a mammal, which comprises pathogens in addition to normal cellular fractions. The method includes placing the biological fluid in a reaction volume and contacting a non-thermal plasma with the biological fluid to thereby kill at least a portion of the pathogens within the biological fluid.

### SUMMARY OF THE INVENTION

The present invention was accomplished for the purpose of solving the above-described problems, and an object thereof is to provide a sterilization method and a sterilizer having high sterilization efficiency and being capable of achieving a sufficient sterilization effect even when a water to be treated is stagnant by sterilizing bacteria in the water to be treated by directly acting on the bacteria, as well as an air conditioner, a hand drier, and a humidifier using the sterilizer.

According to an aspect of the present invention, there is provided a sterilization method for a water to be treated. The method is described in claim 1.

According to another aspect of the present invention, there is provided a sterilizer as described in claim 3.

According to another aspect of the present invention, there is provided an air conditioner comprising the sterilizer to have a function of sterilizing a water in a drain.
pan.

According to another aspect of the present invention, there is provided a hand drier comprising the sterilizer to have a function of sterilizing a water in a drain pan.

According to another aspect of the present invention, there is provided a humidifier comprising the sterilizer to have a function of sterilizing a water for humidification and cleaning a humidifying element.

According to the above-described configuration, it is possible to provide a sterilization method and a sterilizer capable of directly and efficiently treating microorganisms and bacteria contained in a water to be treated by a jet of the water to be treated generated simultaneously with discharge caused by a high voltage pulse.

### BRIEF DESCRIPTION OF THE DRAWINGS

In the accompanying drawings:
Fig. 1 is a schematic sectional view showing a sterilizer according to a first example;
Fig. 2 is a schematic sectional view showing electrical flux lines in a discharge electrode part of the sterilizer according to example 1;
Fig. 3 is a schematic sectional view showing a second example of discharge electrode part of the sterilizer according to example 1;
Fig. 4 is a schematic sectional view showing a third example of discharge electrode part of the sterilizer according to example 1;
Fig. 5 is a diagram showing experiment results of experiment 1 according to example 1;
Fig. 6 is a schematic sectional view showing a discharge electrode part used in Comparative Conditions 1 of experiment 1 according to example 1;
Fig. 7 a schematic sectional view showing a discharge electrode part of the sterilizer according to a second example;
Fig. 8 is a diagram showing experiment results of a projection ratio of a high voltage electrode and a jet speed of the sterilizer according to example 2.
Fig. 9 is a schematic sectional view showing a discharge electrode part of a sterilizer according to Embodiment 1;
Fig. 10 is a schematic sectional view showing another example of discharge electrode part of the sterilizer according to Embodiment 1;
Fig. 11 is a schematic sectional view showing yet another example of discharge electrode part of the sterilizer according to Embodiment 1;
Fig. 12 is a schematic sectional view showing yet another example of discharge electrode part of the sterilizer according to Embodiment 1;
Fig. 13 is a schematic sectional view showing a discharge electrode part of the sterilizer according to example 3;
Fig. 14 is a schematic sectional view showing a discharge electrode part of the sterilizer according to example 4;
Fig. 15 is a schematic sectional view showing a discharge electrode part of the sterilizer according to example 5;
Fig. 16 is a schematic sectional view showing one example of equipping an air conditioner having cooling and heating functions with a sterilizer according to
Embodiment 2;
Fig. 17 is a diagram showing experiment results of an effect of eliminating fungal forms in a heat exchanger in the air conditioner equipped with the sterilizer according to Embodiment 2;
Fig. 18 is a diagram showing one example of equipping a hand drier with the sterilizer according to Embodiment 3; and
Fig. 19 is a diagram showing one example of equipping a humidifier with the sterilizer according to Embodiment 4.

### DETAILED DESCRIPTION OF THE INVENTION

Hereinafter, configuration and operation of a sterilization method and a sterilizer according to examples and embodiments of the present invention will be described with reference to the drawings.

### Example 1

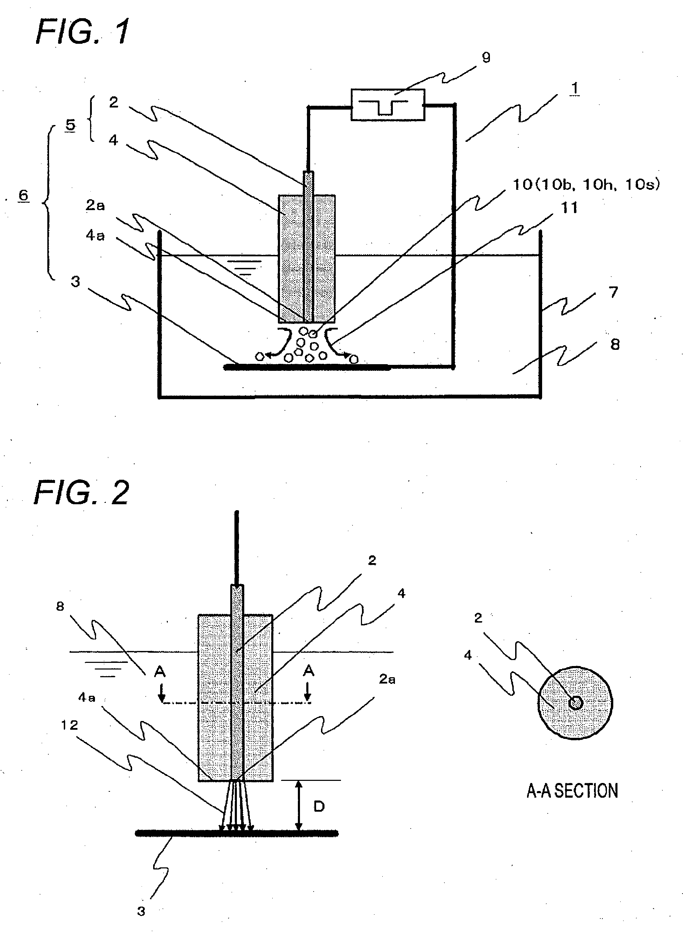

Fig. 1 is a schematic sectional view showing a sterilizer according to example 1 of the present disclosure.

As shown in Fig. 1, a sterilizer 1 is formed of discharge electrodes 6 that are a pair of a stick type high voltage electrode 2 and a plate type ground electrode 3, wherein the high voltage electrode 2 is covered with an insulator 4 except for an end face on a tip part 2a to form a high voltage electrode part 5, and the tip part 2a of the high voltage electrode 2 and the ground electrode 3 are disposed with a predetermined inter-electrode distance to be disposed opposite to each other in a state of being immersed into a water to be treated 8 in a treatment tank 7. Further, the high voltage electrode 2 and the ground electrode 3 are connected to a power source 9 for generating a high voltage pulse. Bubbles 10 are generated by discharge, and a jet 11 is a flow of water occurring along with the bubbles 10.

Hereinafter, an operation principle of a sterilization method using the sterilizer of example 1 will be described with reference to Fig. 1.

After charging the treatment tank 7 with the water to be treated 8, a negative high voltage pulse of 2 to 50 kV and 100 to 20,000 Hz is applied between the high voltage electrode 2 and the ground electrode 3 from the power source 9 for performing discharge. Dielectric breakdown occurs due to the discharge of the high voltage electrode 2, and the water is evaporated by the energy to be vaporized along with a shock wave, thereby generating bubbles 10b of water vapor. Also, at the same time, electrolysis is caused on the high voltage electrode 2 so that bubbles 10h of hydrogen (H₂) according to Reaction Formula (1) are generated.

2H⁺ + 2e⁻ → H₂ (1)

A cluster structure of water is formed of water molecules (H₂O) and a small amount of H⁺ and OH⁻ generated by ionization of the water molecules. A surface boundary of a bubble has a characteristic that H⁺ and OH⁻ are easily aggregated in a structure, and an ionic density of H⁺ and OH⁻ is higher at the surface boundary than in the water around the bubbles 10. Particularly, OH⁻ has stronger aggregation tendency and causes the surface boundary to be negatively charged. That is, the bubbles 10 are negatively charged. Bubbles 10s of oxygen (O₂) generated at the ground electrode 3 by the electrolysis stay in the vicinity of the ground electrode 3 and do not contribute to the sterilization.

As shown in Fig. 2, when the negative high voltage pulse is applied to the discharge electrodes 6, radial extension of electrical flux lines 12 generated between the high voltage electrode 2 and the ground electrode 3 is suppressed since the tip part 2a is not a projection but is flat, and the electrical flux lines 12 flow in a perpendicular direction from the high voltage electrode 2 to the ground electrode 3. Also, since all of lateral surfaces of the high voltage electrode 2 are covered with the insulator, and since the end face of the tip part 2a of the high voltage electrode 2 and a tip part 4a of the insulator 4 are on an identical plane, the tip part 2a of the high voltage electrode 2 contributes to the discharge.

Therefore, the bubbles 10 generated in the vicinity of the high voltage electrode 2 are attracted to the ground electrode 3 due to accumulation of charged particles such as electrons generated by the discharge, a shock wave during water vapor generation, electron migration due to an electrical field formed between the high voltage electrode 2 and the ground electrode 3, and the negative charge of the bubbles 10. Consequently, a jet 11 is generated by the bubbles 10 directed from the high voltage electrode 2 to the ground electrode 3.

In general, a bubble moves upward due to a buoyant force when generated gases are gathered together and the size of the bubble becomes that satisfying "buoyant force > gravity" (a several millimeters). In contrast, the bubbles 10 of the present invention move from the high voltage electrode 2 to the ground electrode 3 as soon as the bubbles 10 are generated in the vicinity of the high voltage electrode 2 due to the shock wave during water vapor generation, the migration of electrons due to electrical field effect, and the negative charge. Since the size of the bubbles 10 of the present invention is very small with a diameter immediately after the generation being from 0.1 µm to a several micrometers and a diameter at 500 ns after the generation being 100 µm to a several hundreds of micrometers, the bubbles 10 rapidly move upward and stay in the water by defying the buoyant force and without being burst and disappeared on a water surface and move along with the jet 11.

Microorganisms and bacteria floating in the water are treated during the discharge by active species such as OH, H, O, O₂⁻., O⁻, H₂O₂, and the like formed by the plasma generation in the vicinity of the high voltage electrode 2, heating in the discharge region, and the shock wave caused by the heating. Since a range of the shock wave is narrow, the microorganisms and bacteria existing around the shock wave are sterilized immediately after the plasma generation. Also, since the active species have a considerably short life, which is 10⁻⁸ seconds and sterilize the microorganisms and bacteria existing around the plasma. Further, the active species sterilize the microorganisms and bacteria carried close to the discharge region along with the movement of water caused by the jet 11 generated by the pulse discharge. As used herein, sterilization means destruction and extinguishment of microorganisms, fungus, bacteria, and the like.

Along with the jet 11 caused by the bubbles 10 and starting from the high voltage electrode 2, bacteria and microorganisms contained in the water to be treated 8 are flown toward the high voltage electrode 2, so that the microorganisms and the bacteria are sterilized by the plasma at the tip part 2a of the high voltage electrode 2 continuously and efficiently. By performing the discharge to the jet 11 generated by the bubbles 10, it is possible to sterilize the microorganisms and bacteria of the whole water to be treated even when the water to be treated 8 is stagnant.

The reason for the use of the discharge caused by the high voltage pulse is that the high voltage pulse discharge is characterized by being capable of transforming a wider region into plasma as compared to a direct current discharge. The high voltage pulse discharge enables application of a voltage higher than that of the direct current discharge, expansion of a high electrical field region, and a reduction in discharge suppression thanks to rapid rising of the voltage, the discharge suppression being otherwise caused by space charge electrical field.

Energy required for ionizing gas molecules and water molecules is called an ionization energy, and a value of the ionization energy is about 10 to 15 eV. Various active species (radicals) that are excited to a high energy state that is short of ionization are generated in a large amount in the plasma. Energy of an ordinary chemical bond is a several electron volts at the highest, and various chemical reactions are caused by the radicals and the like.

Electron is far lighter than an ion and has a moving distance that is three times larger than that of an ion in an electrical field. Since the electron is accelerated to a several tens of energy by the electrical field during the application of high voltage pulse having the short duration, it is possible to ionize the gas molecules and water molecules. Since an ion is heavy, the ion is hardly capable of moving and does not contribute to the ionization of gas molecules and water molecules, These facts mean that a large potential difference is carried to the electron by the electrical field, and that a large part of the input energy is used for the acceleration of electron without giving useless energy to the ion. Such plasma is called non-equilibrium plasma, and, from the reasons described above, the pulse discharge is capable of enhancing energy efficiency for inducing the chemical reaction as compared to the direct current discharge.

Hereinafter, a method for manufacturing the high voltage electrode part 5 will be described. In the case of using a metal in the form of a stick as an electrode material for the high voltage electrode 2, the metal in the form of a stick is fixed to a die having a depression in the form of the high voltage electrode part for fixing the metal stick. After that, a resin to serve as the insulator 4 is poured by way of injection molding, powder molding, compression molding, or the like, followed by solidification in such a manner that a periphery of the metal stick to be used as the high voltage electrode 2 is covered with the insulator 4 having a cylindrical vertical section. A tip serving as a discharge side of the high voltage electrode 2 of the structural body of the high voltage electrode part 5 thus manufactured is cut off to expose the tip part 2a. By covering whole lateral surfaces of the high voltage electrode 2 with the insulator 4, a structure of the high voltage electrode part having the tip part 2a at which the discharge occurs is established. Also, a structural body for high voltage electrode that is obtained by fixing the electrode material to the center of the die and extrusion molding may be cut at a certain length to be used as the high voltage electrode 2. The cut end serves as the tip part (discharge part) 2a, and the other end is used as a part for connecting thereto a conduction line connected to the power source 9 for generating the high voltage pulse. As a method for forming the insulator 4, a method for coating the electrode, such as dipping, may be employed.

Also, as the material for the high voltage electrode 2, an electrode manufactured from an electroconductive powder paste may be used without limitation to the metal stick. A part of the insulator 4 is manufactured by manufacturing a part of a die in the farm of an insulator covering the high voltage electrode 2 in the same manner as described above. After that, a powder paste serving as the electrode is applied to and solidified on a surface layer. After that, molding is performed for the purpose of covering the solidified powder paste with the insulator 4. Thus, the high voltage electrode part 5 wherein the powder paste serving as the high voltage electrode 2 is embedded into the insulator 4 is manufactured, and the high voltage electrode part 5 is cut at two points so as to be exposed to the section of the high voltage electrode 2. One of the cut ends serves as the tip part (discharge part) 2a, and the other part serves as a part for connecting thereto a conduction line connected to the power source 9. The high voltage electrode 2 using the metal powder paste has the advantage of being cheaper than that obtained by using the metal wire.

The size of the high voltage electrode 2 may be such that a diameter is 0.5 mm or less, for example, for the purpose of concentrating the electrical power and generating plasma. Preferably, a diameter of 0.1 to 0.05 mm that enables plasma generation at a low frequency (about 100 Hz) is sufficient. Also, an inter-electrode distance D between the high voltage electrode 2 and the ground electrode 3 may be 1 to 50 mm, preferably 5 to 20 mm.

By the discharge between the high voltage electrode 2 and the ground electrode 3 opposed to the high voltage electrode 2, the generated discharge heat reaches not only to the water but also to the covering insulator 4. Therefore, the insulator 4 covering the high voltage electrode 2 may preferably be those capable of enduring the heat generated by the high voltage pulse discharge and having heat resistance. Particularly, since a temperature of the high voltage electrode 2 becomes 1000°C in the case of a high frequency (1 to 30 kHz), the insulator 4 may preferably be made from a heat resistant material of which lower one of a softening temperature and a decomposition temperature is 300°C or more, and those having a low water absorption ratio and good heat conductivity. Examples of the material satisfying the conditions include a polyimide resin, a fluorine resin, a ceramic, a glass, and the like. Further, by keeping a thickness of the insulator to 2 mm or less, it is possible to improve a discharge property and to suppress deformation and deterioration of the insulator 4 obtained by using the resin, Also, by reducing the thickness of the insulator 4, it is possible to facilitate the migration of the bubbles 10 generated at the insulator 4 to the ground electrode 3 without accumulation of the bubbles 10 generated at the insulator 4 on the resin surface. Also, the insulator 4 may preferably have a heat expansion ratio that is close to a heat expansion ratio of the electrode material to be used. With such constitution, in the case of covering the metal of the electrode material of the high voltage electrode 2 with the insulator 4, it is possible to improve adhesion between the metal and the insulator since the materials are solidified while shrinking at identical rates, and a stable operation is expected due to a reduction in stress caused along with a temperature rise during use.

As describe above, according to the sterilizer of example 1, the discharge is generated by the application of negative high voltage pulse to the discharge electrode, and the bubbles of water vapor generated by evaporation and vaporization of water by the energy and the bubbles of hydrogen generated by the electrolysis of water are generated. Charged particles such as electrons generated by the discharge are accumulated on surfaces of the bubbles, and the bubbles are attracted to the ground electrode along the electrical field formed between the high voltage electrode and the ground electrode. Therefore, a jet caused by the bubbles occurs in a direction from the high voltage electrode to the ground electrode. The jet of flowing water of which a starting point is the high voltage electrode is generated in the water to be treated around the discharge electrode, and the water to be treated is stirred by the jet so that the microorganisms contained in the water to be treated are flown to the high voltage electrode along with the jet, thereby enabling efficient sterilization in the plasma region at the tip part of the high voltage electrode at which the electrical power is concentrated.

Also, even when the water to be treated is stagnant, a prominent effect of considerably enhancing the sterilization effect by synergy between the stirring and the discharge, which is not achieved by the conventional apparatuses, is achieved.

Though the case of applying the negative high voltage pulse is described in example 1, the same effect is achieved by applying a positive high voltage pulse. In the case of applying the positive high voltage pulse, discharge is generated at the high voltage electrode 2 in the same manner as in example 1, and the water is evaporated by the energy and vaporized together with a shock wave so that bubbles 10b of water vapor are generated. Also, electrolysis simultaneously occurs at the high voltage electrode 2 so that bubbles 10s of oxygen (O₂) by a reaction formula (2) are generated.

2H₂O → O₂ + 4H⁺ + 4e⁻ (2)

Though the bubbles 10 are negatively charged in the same manner as in example 1, a flow is caused by the shock wave during the water vapor generation. As a result, a jet 11 of the bubbles 10 generated by the discharge occurs in the same manner as in example 1. Along with a flow of the water caused by the jet 11 of the bubbles 10, of which a starting point is the high voltage electrode 2, bacteria and microorganisms contained in the water to be treated 8 are flown to the high voltage electrode 2 together with the water flow so that the bacteria and the microorganisms are sterilized by a plasma at the tip part 2a of the high voltage electrode 2 continuously and efficiently. In this case, though hydrogen (H₂) is generated by electrolysis at the ground electrode 3, the hydrogen stays in the vicinity of the ground electrode 3 and does not contribute to the sterilization.

Also, by keeping the discharge polarity to negative, it is possible to suppress corrosion of the high voltage electrode. According to a metal pH-potential map, it is possible to maintain many of metals to an anti-corrosion state with the negative potential.

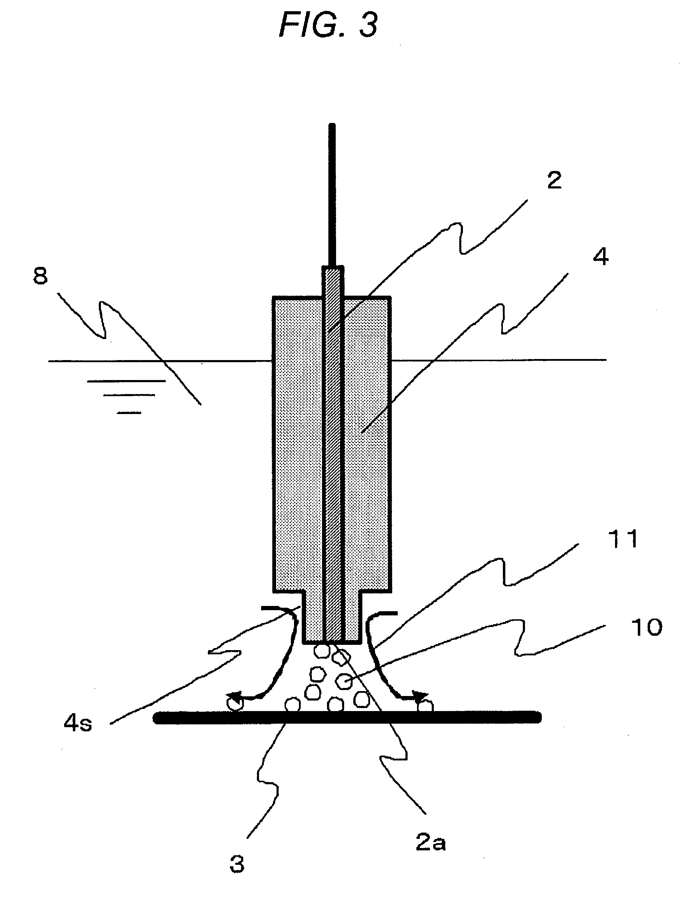

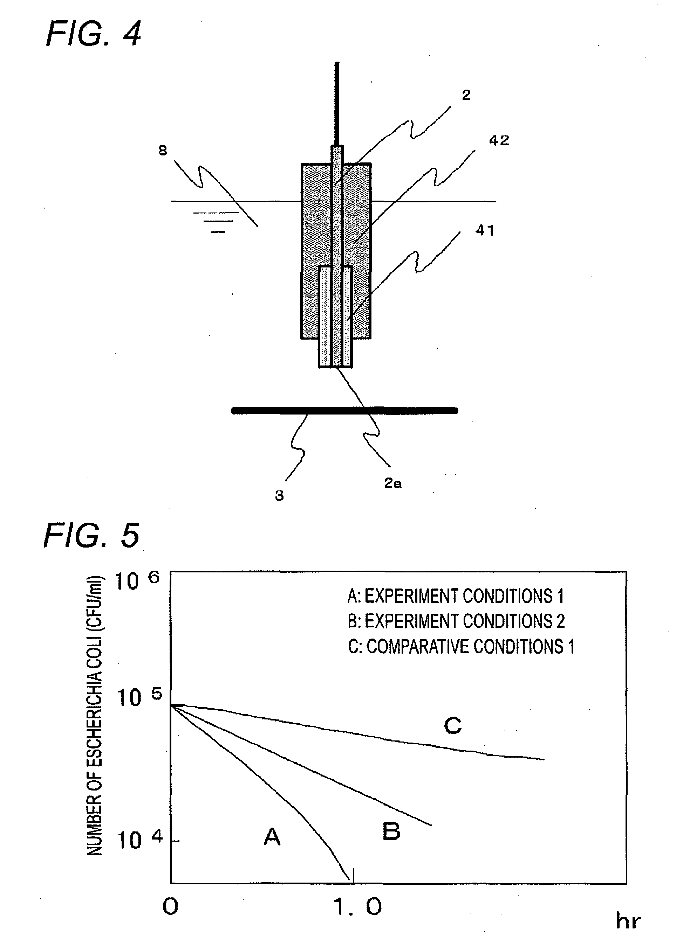

Also, though the vertical section shape of the insulator 4 is cylindrical in Embodiment 1, the shape is not limited to the cylindrical shape and may be in the form of a rectangular cylinder without limitation to the shapes. As a second example of the structure of the high voltage electrode part, a step 4s may be formed at the tip part of the insulator 4 as shown in Fig. 3, and the step 4s makes the flow of the jet 11 accompanied by the bubbles 10 smoother to improve the sterilization efficiency. Also, as a third example of the structure of the high voltage electrode, the insulator 4 has a two layer structure of an insulator 41 and an insulator 42 as shown in Fig. 4, and, more specifically, the tip part of the high voltage electrode 2 is covered with the heat resistant insulator 41 of ceramic or a polyimide resin, which is excellent in heat resistance, and the non-heat resistant insulator 42 having a low heat resistance is formed on the heat resistant insulator 41.

Also, a material for the ground electrode 3 may be a metal such as tungsten (W), platinum (Pt), and titanium (Ti), and the shape thereof is not limited in terms of size and immersion position and may be circular, stick-like, or linear without limitation to the flat-plate like shape. Note that the ground electrode 3 is opposed to the tip part 2a of the high voltage electrode 2 since the actual sterilization is performed between the high voltage electrode and the ground electrode. The treatment tank 7 may preferably be an insulator, and an acryl resin, a glass, or the like is usable for the treatment tank 7. Also, a part of a bottom part of the treatment tank may be used as the ground electrode 3 by forming the part from the above-listed metal.

Though the case wherein the pair of the high voltage electrode 2 and the ground electrode 3 is used as the discharge electrodes 6 is described in example 1, a plurality of pairs of electrodes may be used, and it is possible to enhance the sterilization capability by using such plurality of pairs of electrodes. Also, a structure of a plurality of high voltage electrodes 2 and a shared ground electrode 3 may be employed. Also, the ground electrode 3 may have the same shape as the high voltage electrode 2.

### [Experiment 1]

In order to confirm the sterilization effect on bacteria and microorganisms, Escherichia coli was thrown into the treatment tank 7, and a time change of a residual ratio of Escherichia coli caused by the pulse discharge was investigated. Shown in Fig. 5 are experiment results obtained under Experiment Conditions 1, Experiment Conditions 2, and Comparative Conditions 1 as Experiment 1 according to example 1.

In Experiments, a tungsten (W) wire having a diameter of 0.2 mm and a length of 50 mm was used as the high voltage electrode 2, and a periphery of the high voltage electrode 2 was covered by injection molding with an epoxy resin which was used as the insulator 4 and had a diameter of 10 mm. Also, as the ground electrode 3, a meshed electrode (diameter: 5 cm) obtained by plating a titanium expand metal (number of meshes: 80 per 1 inch square; a wire diameter: 0.1 mm) with platinum (Pt) by way of electroless plating at a supporting density of 0.6 mg/cm² was used. An inter-electrode distance D between the high voltage electrode 2 and the ground electrode 3 was 3 mm. Also, a glass treatment tank was used as the treatment tank 7, and the water to be treated 8 to which 10⁵ CFU/ml (CFU: Colony Forming Unit) of Escherichia coli was added was poured into the treatment tank 7.

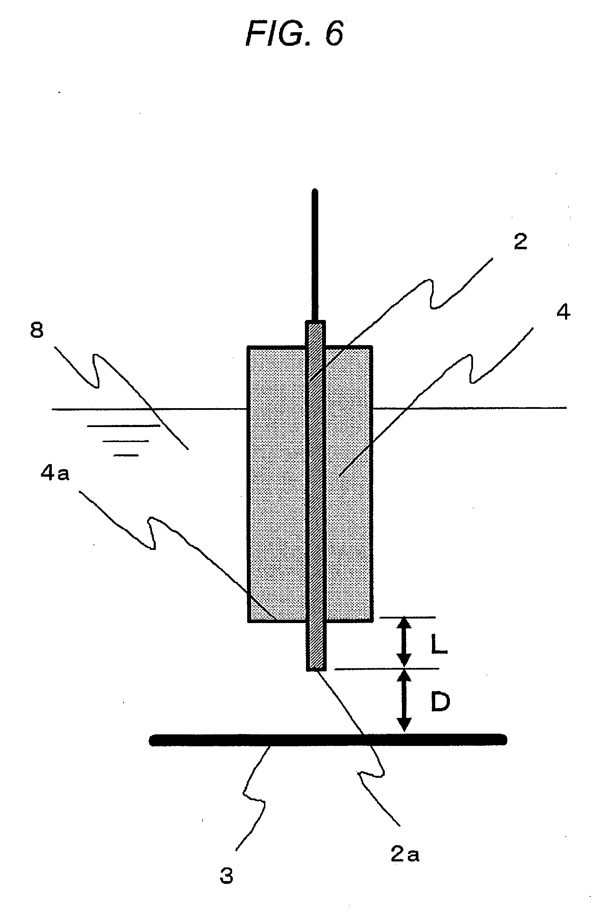

Discharge conditions in Experiment Conditions 1 (A) were such that a negative high voltage pulse was applied at a voltage of -10 kV, a cycle period of 100 Hz, and a pulse width of 50 µs. Discharge conditions in Experiment Conditions 2 (B) were such that a positive high voltage pulse was applied at a voltage of 10 kV, a cycle period of 100 Hz, and a pulse width of 50 µs. In Comparative Conditions 1 (C), a high voltage electrode that was obtained by not covering the length L of 3 mm of the tip part 2a with the insulator 4 was prepared as the high voltage electrode 2 as shown in Fig. 6. Other parts of the structure were the same as Experiment Conditions 1 and Experiment Conditions 2. Discharge conditions were such that a negative high voltage pulse was applied at a voltage of -10 kV, a cycle period of 100 Hz, and a pulse width of 50 µs.

Under Experiment Conditions 1 and 2, bubbles and a jet were generated. Under Comparative Conditions 1, a jet due to bubbles was not generated at all. Also, a jet speed achieved under Experiment Conditions 1 where the discharge by negative high voltage pulse was used was more than twice the speed achieved under Experiment Conditions 2 where the discharge by positive high voltage pulse was used, As a result, a reduction in number of Escherichia coli under Experiment Conditions 1 (A) was more rapid than that achieved under Experiment Conditions 2 (B), and one digit or more of Escherichia coli were reduced in one hour. The number of Escherichia coli was not changed prominently under Comparative Conditions 1 (C).

From the above results, it is apparent that a higher sterilization effect was achieved under Experiment Conditions 1 and Experiment Conditions 2 that caused the jet accompanied by the bubbles as compared to Comparative Conditions 1 that did not involve the jet of bubbles. Further, as a comparison between the positive pulse discharge and the negative pulse discharge, it is apparent that the higher sterilization rate was achieved by the negative high voltage pulse sterilization (Experiment Conditions 1) as compared to the positive high voltage pulse sterilization (Experiment Conditions 2). Consequently, the sterilization effect achieved by the high voltage pulse discharge accompanied by the jet of bubbles was confirmed.

### Example 2

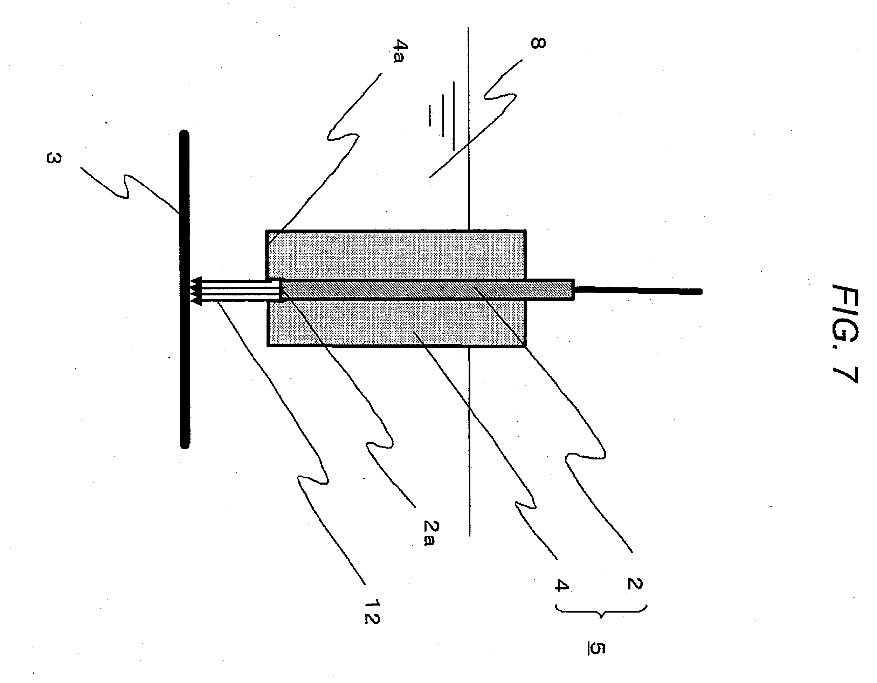

Fig. 7 is a schematic sectional view showing a discharge electrode part of a sterilizer according to example 2 of the present disclosure.

As shown in Fig. 7, the sterilizer according to example 2 is the same as that of Fig. 1 of example 1 except that a tip part 2a of a high voltage electrode 2 contributing to discharge is recessed inward from a tip part 4a of an insulator 4 in the discharge electrode part, and description of other parts of the structure will be omitted.

Hereinafter, a method for manufacturing the high voltage electrode part will be described. In the same manner as in example 1, a metal in the form of a stick is fixed to a die having a depression in the form of the high voltage electrode part for fixing the metal stick used as an electrode material for the high voltage electrode 2. After that, a resin to serve as the insulator 4 is poured by way of injection molding, powder molding, compression molding, or the like, followed by solidification in such a manner that a periphery of the metal stick to be used as the high voltage electrode 2 is covered with the insulator 4. A structure of the high voltage electrode part 5 having the tip part 2a at which the discharge occurs is established by performing cutting processing so that the tip part 2a serving as a discharge side of the high voltage electrode 2 of the structural body of the thus-manufactured high voltage electrode part 5 is a little recessed from the tip part 4a of the insulator 4 and covering whole lateral surfaces of the high voltage electrode 2 with the insulator 4. One of the cut ends serves as the tip part (discharge part) 2a, and the other end is used as a part for connecting thereto a conduction line connected to a power source 9 for generating the high voltage pulse.

Also, it is possible to employ a method of recessing the tip part 2a of the high voltage electrode 2 from the tip part 4a of the insulator 4 by about a several tens of micrometers to a several millimeters by melting the tip part 2a by way of a cell action achieved by bringing the tip part 2a of the high voltage electrode 2 obtained in the same manner as in example 1 into contact with gold, silver, or the like that has lower ionization tendency than the electrode material and immersing in water.

As shown in Fig. 7, it is possible to obtain electrical flux lines 12 that are more linear and increased in density by recessing the tip part 2a of the high voltage electrode 2 from the insulator 4. With the linear and high density electrical flux lines, a speed of movement of bubbles is increased to increase a jet speed, thereby improving a rate of flowage of microorganisms in a water to be treated 8 to the vicinity of the tip part 2a of the high voltage electrode 2, resulting in enhancement of sterilization efficiency.

Description of a mechanism of sterilization using the sterilizer of example 2 is omitted since the mechanism is the same as that of example 1.

As described above, since the speed of jet of bubbles is higher than that achieved by the sterilizer of example 1 according to the sterilizer of example 2, it is possible to expect a prominent effect that the sterilization efficiency is further improved.

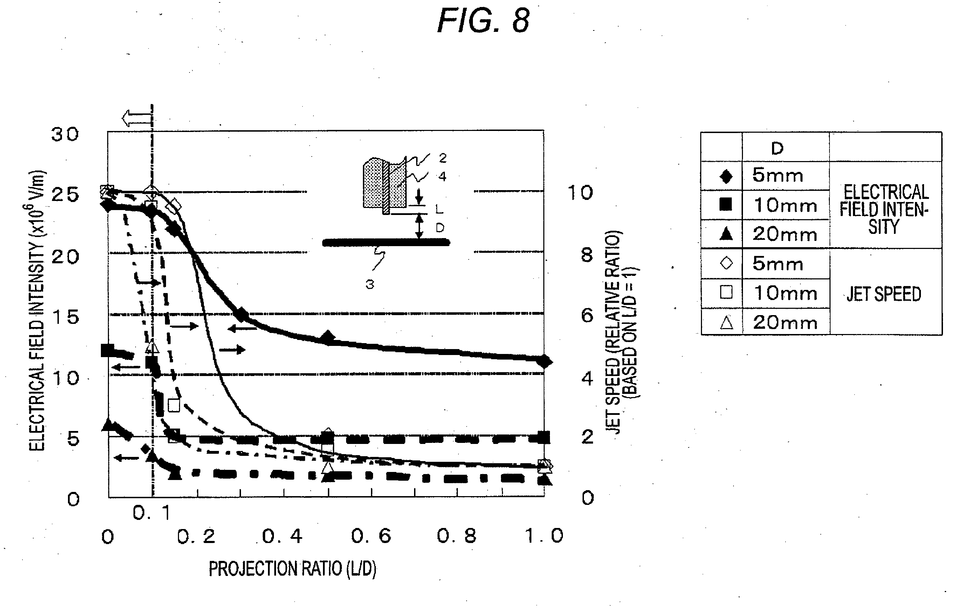

The case wherein the tip part 2a of the high voltage electrode 2 and the tip part 4a of the insulator 4 are on the identical plane is described in example 1, and the case wherein the tip part 2a of the high voltage electrode 2 is recessed inwardly from the tip part 4a of the insulator 4 is described in example 2; however, the tip part 2a of the high voltage electrode 2 may be a little projected from the tip part 4a of the insulator 4. Shown in Fig. 8 is a relationship among a ratio of a projection length L of the tip part 2a of the high voltage electrode 2 to an inter-electrode distance D (projection ratio: L/D), an electrical field intensity, and a jet speed. From Fig. 8, when the inter-electrode distance D is within the range of 1 to 20 mm, the electrical field intensity in the vicinity of the high voltage electrode 2 and the jet speed are high provided that the projection ratio L/D is within the range of 0 to 0.1. However, when the projection ratio is larger than the above, the jet speed is low, and improvement in sterilization effect by the jet is not confirmed. Therefore, it is possible to increase the jet speed even when the tip part 2a of the high voltage electrode 2 is projected from the tip part 4a of the insulator 4 insofar as the projection ratio is within the range of from 0 to 0.1, and it is possible to cause the microorganisms in the water to be treated 8 to flow close to the tip part 2a of the high voltage electrode 2, thereby contributing to the improvement in sterilization efficiency.

### Embodiment 1

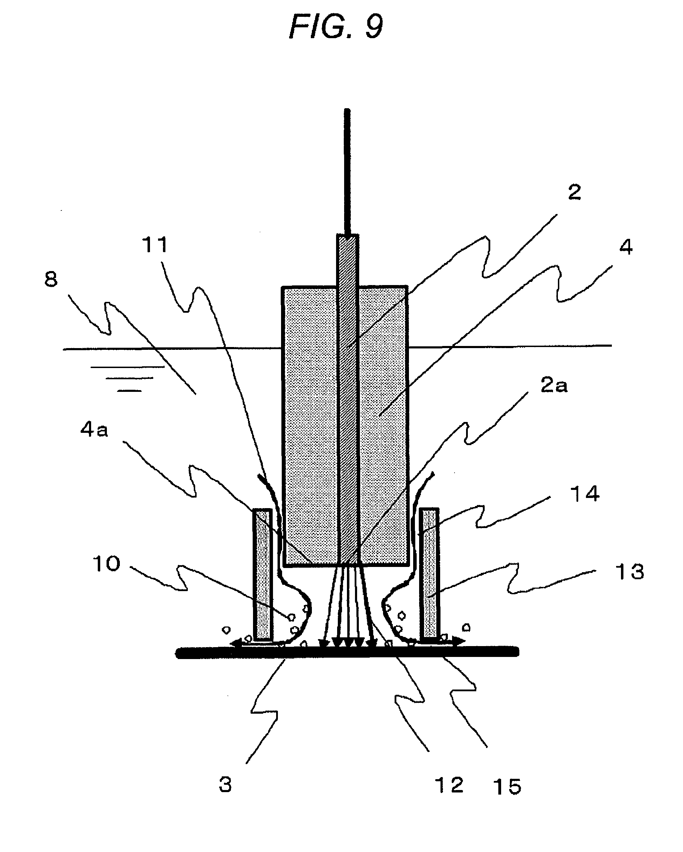

Fig. 9 is a schematic sectional view showing a discharge electrode part of a sterilizer according to Embodiment 1 of the present invention.

As shown in Fig. 9, the sterilizer according to Embodiment 1 is the same as that of example 1 of Fig. 1 except for providing a dielectric cylinder 13 for guiding a flow of a jet in one direction between the insulator 4 and the ground electrode 3 at the discharge electrode part, and description of other parts of the structure will be omitted. The dielectric cylinder 13 is provided in such a manner as to cover a lateral part of the tip part 4a of the insulator 4 and in a state where a gap 14 is defined between the dielectric cylinder 13 and the insulator 4 while a gap 15 being defined between the dielectric cylinder 13 and the ground electrode 3.

Hereinafter, operation of the discharge electrode part 6 that is provided with the dielectric cylinder 13 will be described. For the dielectric cylinder 13, a material that is hardly deteriorated by a pulse discharge and reduced in components soluble to water, such as an epoxy resin, may be used. A glass or a ceramic having the same properties may be used. A thickness is not particularly limited insofar as strength that is resistant to deformation due to a jet 11 is ensured, and the thickness may be 0.5 to 2 mm. The jet 11 is generated along with generation of bubbles 10 caused by the discharge. In a treatment tank 7, a flow of a water to be treated 8 in one direction of passing through the gap 14 between the insulator 4 and the dielectric cylinder 13 and passing through the gap 15 after being guided between the high voltage electrode 2 and the ground electrode 3 is caused. With such flow, since a stronger stirring action as compared to Embodiment 1 is caused, it is possible to improve the rate of introducing microorganisms in the water to be treated 8 close to the tip part 2a of the high voltage electrode 2, thereby achieving an effect of improving sterilization efficiency.

As described above, according to the sterilizer of Embodiment 1, by providing the dielectric cylinder for guiding the flow of jet to one direction between the insulator and the ground electrode at the discharge electrode part, it is possible to expect the nonconventional prominent effect of improving the sterilization efficiency on microorganisms and the like by causing the string action that is stronger than that of example 1 due to the flow in one direction of the water to be treated that is caused by the jet generated by the bubble generation caused by the discharge.

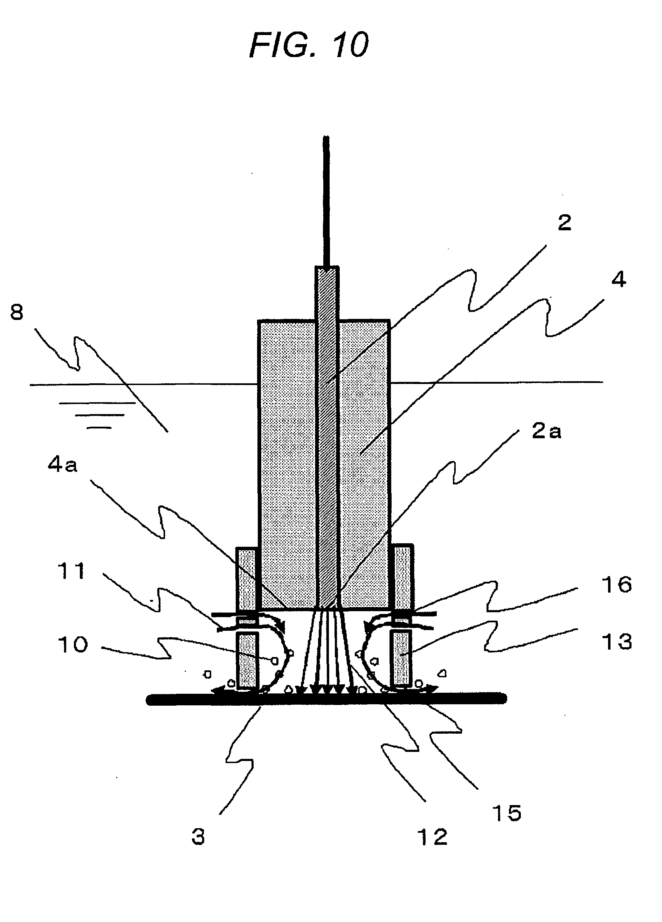

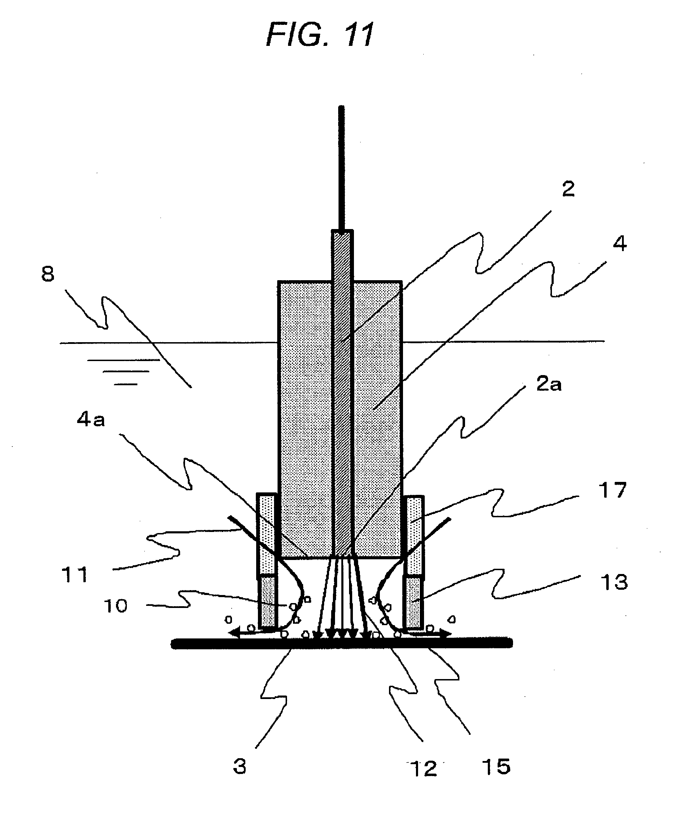

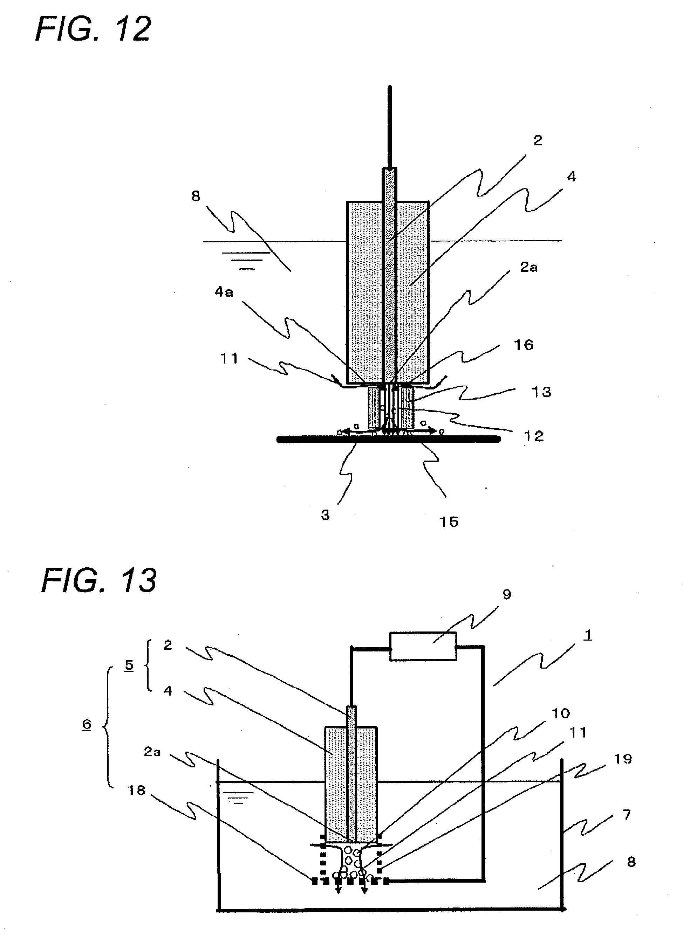

Though the dielectric cylinder of Embodiment 1 creates the flow of water to be treated 8 by the jet 11 by utilizing the gap 14 provided between the lateral surface of the insulator 4 and the dielectric cylinder 13, it is possible to use a dielectric cylinder having an introduction hole 16 formed on the lateral surface of the dielectric cylinder 13 near the tip part 4a of the insulator 4 shown in Fig. 10, and it is possible to improve the sterilization efficiency on microorganisms and the like by generating a string action in the same manner by creating a flow of the water to be treated 8 in a direction from the introduction hole 16 to the gap 15. Also, as shown in Fig. 11, the dielectric cylinder 13 may be provided with a porous part 17 on an upper part thereof. Also, as show in Fig. 12, by maintaining an inner diameter of the dielectric cylinder 13 to that substantially the same as an outer diameter of the high voltage electrode 2, it is possible to more efficiently perform the sterilization by causing a further stronger stirring action thanks to prevention of efflux of the electrical flux lines 12 and confinement of the bubbles 10.

### Example 3

Fig. 13 is a schematic sectional view showing a sterilizer according to example 3 of the present invention.

As shown in Fig. 13, the sterilizer according to example 3 is the same as that of Fig. 1 of example 1 except for providing a cylindrical filter 19 between an insulator 4 covering a high voltage electrode 2 and a mesh ground electrode 18 as well as for using the mesh ground electrode, and description of other parts of the structure will be omitted.

The cylindrical filter 19 formed of an insulator may preferably be in the form of a mesh. Particularly, a mesh structure effectively acts on a jet and stirring of a water to be treated to improve a sterilization property. More specifically, a mesh having openings of (1 to 10) mm x (1 to 20) mm may preferably be used. A material is not particularly limited insofar as the material is an insulator.

The ground electrode 18 is in the form of a mesh like the filter 19, i.e. has a mesh structure, and effectively acts on a jet and stirring of a water to be treated to improve a sterilization property. More specifically, a mesh having openings of 5 mm x (2.5 to 5.0) mm may preferably be used. A material for the ground electrode 18 may preferably be those having a high electroconductivity ratio and being resistant to oxidization, such as platinum (Pt), iridium oxide (IrO₂), or the like. Alternatively, platinum or iridium oxide may be plated on a metal material such as titanium (Ti). For example, as a substrate, a cloth (radius: 50 mm; thickness: 300 µm) having a density of 200 g/cm² made from a sintered body of a titanium (Ti) metal fiber (fiber diameter: 20 µm; sintered body obtained by interweaving a single fiber having a length of 50 to 100 mm) or a titanium expand metal having a mesh structure may be used. The substrate is plated with platinum (Pt) or iridium oxide (IrO₂) at a density of 0.25 to 2 mg/cm². Description of a mechanism of sterilization using the sterilizer of example 3 is omitted since the mechanism is the same as that of example 1.

When a solid matter exits between the high voltage electrode 2 and the ground electrode 3 during discharge, short occurs to result in breakage of the electrodes in some cases. Also, when the vicinity of a tip part 2a of the high voltage electrode 2 is contaminated with an organic substance, discharge energy is used for organic substance decomposition to deteriorate a rate of contribution of the discharge energy to sterilization. In view of the above, the sterilization efficiency is deteriorated when a solid organic substance other than microorganisms, such as dust, exists between the high voltage electrode 2 and the ground electrode 3. In contrast, since the cylindrical filter 19 is provided between the insulator 4 covering the high voltage electrode 2 and the mesh ground electrode 18 as shown in Fig. 13 in example 3, it is possible to avoid prevention of a flow of a jet 11, to eliminate the risk of contamination with the solid organic substance other than microorganisms, such as dust, between the high voltage electrode 2 and the mesh ground electrode 18, and to prevent the inter-electrode short, thereby making it possible to efficiently treat microorganisms, bacteria, and the like without deteriorating the sterilization efficiency.

As described above, according to the sterilizer of example 3, since it is possible to efficiently treat microorganisms, fungus, bacteria, viruses, and the like while eliminating the risk of contamination with solid organic substance other than the microorganisms, such as dust, by providing the cylindrical filter between the insulator covering the high voltage electrode and the mesh ground electrode, it is possible to expect the nonconventional prominent effect of preventing the inter-electrode short without deterioration of sterilization efficiency.

### Example 4

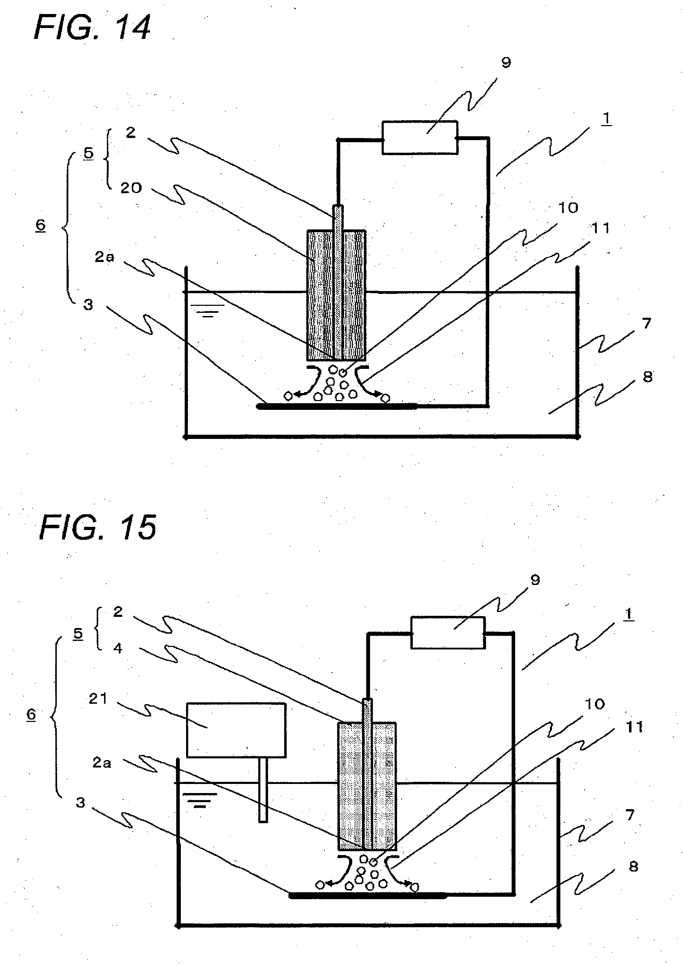

Fig. 14 is a schematic sectional view showing a sterilizer according to example 4 of the present invention.

As shown in Fig. 14, in the sterilizer 1 according to example 4, a hydrophilic insulator 20 is used as an insulator covering a high voltage electrode 2. A contact angle may be 60° or less, preferably 30° or less. A material for the hydrophilic insulator 20 may be an epoxy resin, for example. Other parts of the structure are the same as Fig. 1 of example 1, and description of the other parts will be omitted.

The hydrophilic insulator 20 is preferred for the purpose of preventing a contact between a water to be treated 8 with parts other than a tip part (discharge part) 2a of a high voltage electrode 2, since the discharge occurs at the part where the high voltage electrode 2 contacts the water to be treated 8.

Solubilities of O₂ and H₂ that are types of bubbles to be generated are low, which are 28.5 ml/kg and 17.5 ml/kg at an atmospheric pressure of 1 and 20°C. That is, since O₂ and H₂ have poor affinity with water and a low hydrophilic property, O₂ and H₂ hardly adhere to a surface of hydrophilic solid. Therefore, bubbles generated by discharge hardly reach to the surface when a contact surface of a surface of the insulator is 60° or less, and almost all of the bubbles do not reach to the surface when the contact angle is 30° or less. In view of the above, according to the sterilizer 1 of example 4, since the hydrophilic insulator 20 covering the high voltage electrode 2 has a hydrophilic property, it is possible to achieve a sterilization effect as in example 1, and it is possible to improve sterilization efficiency on the water to be treated 8 thanks to a jet force that is increased by the generated bubbles 10 moving to the ground electrode 3 smoothly without staying near the high voltage electrode 2.

For example, in the case of using tungsten (W) or platinum (Pt) as an electrode material of the high voltage electrode 2, an epoxy resin may preferably be used as the hydrophilic insulator 20.

Also, in the case where the insulator is hydrophobic, it is possible to use an insulator that is subjected to a surface treatment and has a contact angle of 60°. As one example of a method of the surface treatment, an ultraviolet ray treatment using a low pressure mercury lamp will be described. A wavelength of light emitted by the low pressure mercury lamp is a highly efficient short wavelength UV ray wherein wavelengths of 185 nm and 254 nm called resonance lines occupies about 80% of energy. The 185 nm ray is called an ozone ray and generates ozone (O₃) by decomposing oxygen (Reaction Formulas 3 and 4 wherein M is third-body molecule). The ozone absorbs the 254 nm wavelength to generate an oxygen radical (Reaction Formula 5).

O₂ + (185 nm) → O+O (3)

O₂ + O + M → O₃+M (4)

O₃ + (245 nm) → O+O₂ (5)

The oxygen radical (O) attacks the insulator surface to form functional groups having polarity and high hydrophilic property, such as OH, C-O, C=O, COO, and C(O)OH. When an irradiation distance is 5 cm, the contact angle rapidly rises in an exponential manner within one minute of irradiation time and continues to gradually rise after the rapid rise. Therefore, in the case where a resin such as polybutylene telephthalate (PBT) or polyphenylene sulfide (PPS) is used, the contact angle of 60° or more is reduced to 30° or less to considerably improve the hydrophilic property by about 5 minutes of irradiation.

Description of a mechanism of sterilization using the sterilizer of example 4 is omitted since the mechanism is the same as that of example 1.

Examples of the method of achieving the hydrophilic property by subjecting the hydrophobic insulator material to the surface treatment other than the ultraviolet ray treatment include a plasma treatment, an ozone treatment, a Colona treatment, an electron beam treatment, a laser treatment, ion injection, a sputtering treatment, a mirror surface treatment, and the like, and the same effect is achieved by such methods.

Note that the tip part 2a of the high voltage electrode 2 is oxidized together with the insulator by the treatments other than the sputtering treatment and the mirror surface treatment, and it is necessary to perform the treatments after covering the tip part 2a with another resin.

As described above, according to the sterilizer of example 4, since the jet force of water is increased due to the generated bubbles moving smoothly to the ground electrode without staying near the high voltage electrode when the hydrophobic material is used for the insulator covering the high voltage electrode, it is possible to expect a nonconventional prominent effect of improving the sterilization effect.

### Example 5

Fig. 15 is a schematic sectional view showing a sterilizer according to example 5 of the present invention.

As shown in Fig. 15, the sterilizer 1 according to example 5 is the same as Fig. 1 of example 1 except for providing an additive injection tank 21 for injecting an additive, and description of other parts will be omitted.

In example 1, though the diameter of the bubbles 10 generated near the high voltage electrode is 0.1 µm to a several micrometers immediately after the generation, the diameter is increased to 10 to several hundreds of micrometers at 500 ns. In example 5, by mixing an additive with a water to be treated, generated bubbles 10 are stably maintained to a several micrometers to extend a period of existing as fine bubbles. Therefore, since the bubbles are light and easily charged, a jet speed is increased to improve sterilization efficiency.

As a component of the additive to be supplied to the additive injection tank, acetic acid or carboxylic acid having a hydrophilic residue other than a carboxylic group are usable. The hydrophilic residue represents -OH, -NH₂ (primary amine), -NH-(secondary amine), -N<(tertiary amine), -C(O)NH- (peptide bond), -C(O)NH₂ (primary amide), (-C(O))₂NH (secondary amide), (-C(O)₃N (tertiary amide), -O=, -SO₃H, -PO₄H, -F, -NO₂, -S(O)-, -CN, or the like. Also, a concentration of the residue (carboxyl group) to water may preferably be 0.001 to 1 mol/L, more preferably 0.001 to 0.2 mol/L. In the case where the residue concentration is lower than 0.001

mol/L, the diameters of bubbles of oxygen and hydrogen to be generated tend to be larger. In the case where the residue concentration is higher than 1 mol/L, the bubbles float to the surface tend to hardly disappear. As used herein, the term "residue concentration" means a value obtained by multiplying a molecular concentration by the number of residues (carboxyl groups in this example) in one molecule.

A pH value of the water may preferably be 4 or less, more preferably 3 or less. In the case where the pH value of water is larger than 4, the diameter of the bubbles to be generated tend to be larger. In the case of adding an inorganic compound, a salt having a strong ionizing property such as sodium chloride, potassium chloride, sodium sulfate, and potassium sulfate may be used. A salt concentration may preferably be 0. 1 wt% or more.

After adding the additive from the additive injection tank in such a manner as to achieve the above-specified concentration of the additive in the water to be treated, discharge is performed by the method same as that of example 1.

As described above, according to the sterilizer of example 5, since the additive is added to the water to be treated, the jet speed of water is increased by causing the bubbles generated by the discharge to exist in the fine state, and it is possible to expect a nonconventional prominent effect of improving sterilization efficiency.

### Embodiment 2

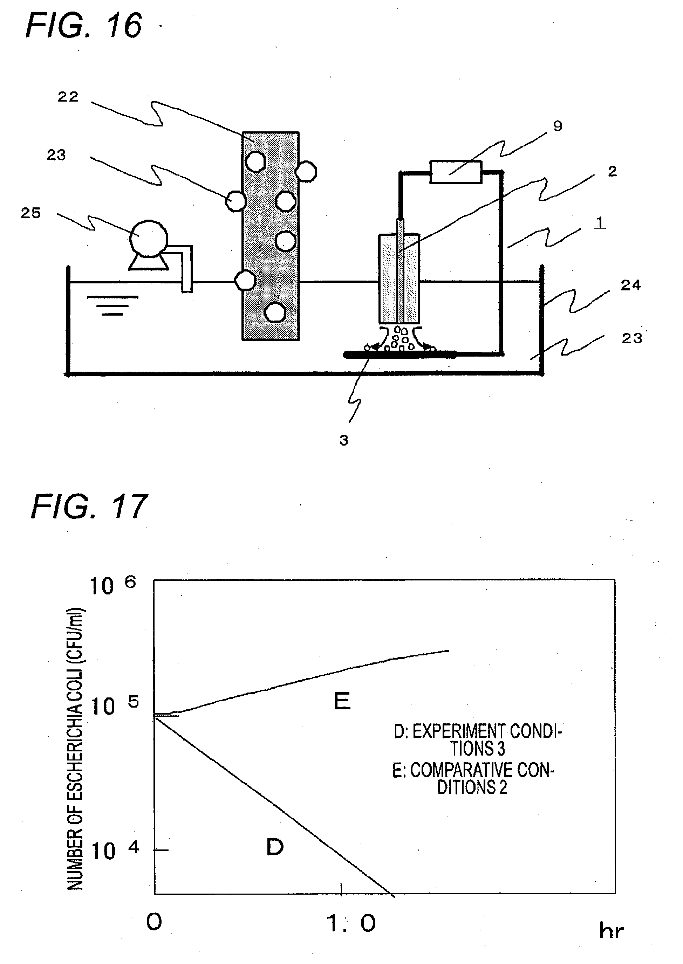

Fig. 16 is a schematic sectional view showing one example of equipping an air conditioner having cooling and heating functions with a sterilizer according to Embodiment 2 of the present invention. Water vapor in the air is cooled on a surface of a heat exchanger 22 to be condensed on the surface of the heat exchanger 22 and becomes a condensed water 23 (the condensed water will hereinafter be refereed to as a drain water). Since the surface of the heat exchanger 22 has been subjected to a hydrophilication treatment, natural dropping starts when more than a certain quantity of the condensed water 23 adheres to the surface to be collected by a drain pan 24 as the drain water 23. Fungus, bacteria, and the like of the drain water are removed by using the sterilizer 1 provided on the drain pan.

As described above, according to the air conditioner equipped with the sterilizer according to Embodiment 2, since the microorganisms, fungus, and bacteria in the drain water are sterilized by the sterilizer, it is possible to expect a nonconventional prominent effect of achieving effects such as suppression of generation of fungus and bacteria and generation of slime on the drain pan surface and suppression of clogging of a drain pump.

### [Experiment 2]

Shown in Fig. 17 are experiment results according to Experiment 2 of an effect of eliminating fungal forms adhered to the heat exchanger of the air conditioner equipped with the sterilizer according to Embodiment 2. The experiment was conducted under the following conditions. As sterilization conditions, negative pulse discharge was performed at -10 kV and 100 Hz by setting an inter-electrode distance D of the high voltage electrode 2 and the ground electrode 3 to 10 mm. Also, as a material for forming the sterilizer 1, the one same as that of example 1 was used.

Water vapor in the air is cooled on a surface of the heat exchanger 22 to be condensed on the surface of the heat exchanger 22 and becomes the condensed water 23. Since the surface of the heat exchanger 22 has been subjected to a hydrophilication treatment, natural dropping starts when the condensed water 23 in a quantity of 0.1 mg/cm² or more per unit area adheres to the surface to be collected by a drain pan 24 as the drain water 23. During operation of the air conditioner, the drain pump 25 starts to operate when the drain water 23 on the drain pan 24 exceeds 800 ml so that the drain water 23 is discharged outside of the air conditioner from the drain pump 25. When the operation of the air conditioner is terminated, the drain pump 25 is stopped so that 500 ml of the drain water 23 that has not been discharged remains in the drain pan 23. Under Experiment Conditions 3 (D), 10⁵ CFU/ml of Escherichia coli was grown in the drain water 23 to measure a change in fungal forms of Escherichia coli by the sterilizer 1. In order to compare sterilization effects by the sterilizer, an experiment of leaving to stand without performing the discharge under the conditions same as that of Experiment 3 (D) was performed as Comparative Conditions 2 (E).

Shown in Fig. 17 is a change in number of fungal forms in the drain water in the case of sterilizing the drain water 23 in the drain pan 24 by the sterilizer 1. Under Experiment Conditions 3 (D), the number of fungal forms decreased to the initial 10⁵ CFU/ml, and sterilization of one digit was attained in one hour. In contrast, under Comparative Conditions 2 (E), the number of fungal forms did not decrease from 10⁵ CFU/ml, but increased gradually to result in an increase of one digit in one hour. From the above results, sterilization of the sterilizer 1 was confirmed.

Hereinafter, the number of fungal forms and a state of generation of slime of a drain water in a drain pan 24 in the case where a cycle of 10 hours of air conditioner operation, one hour of sterilization, and 13 hours of leaving to stand was repeated for 30 times will be described. In the air conditioner where sterilization was performed by the sterilizer 1 after termination of operation of the air conditioner as Experiment Conditions 3, the number of fungal forms gradually decreased from 10⁵ CFU/ml and shifted from 1 to 10² CFU/ml, and the slime generation was not observed. In contrast, in an air conditioner where sterilization was not performed (discharge was not performed) by the sterilizer 1 as Comparative Conditions 2, the number of fungal forms shifted from 10⁵ to 10⁷ CFU/ml, and slime was started to be observed from the day 14.

As described above, it was confirmed that it is possible to suppress the generation of fungus and bacteria as well as the slime generation in the drain pan by sterilizing the drain water of the heat exchanger of the air conditioner by the sterilizer of the present invention.

### Embodiment 3

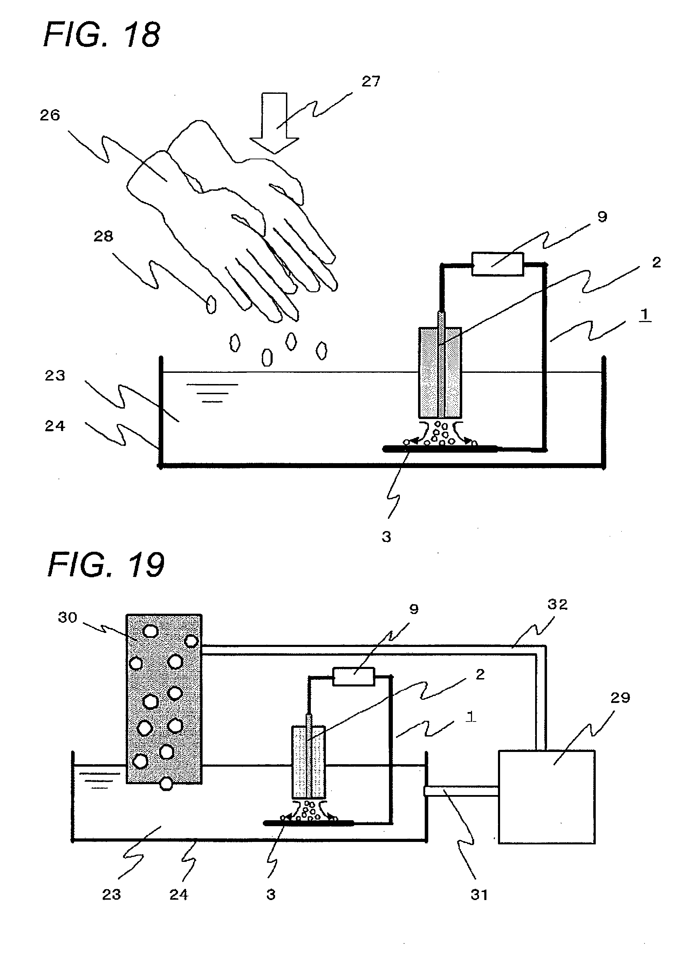

Fig. 18 is a schematic sectional view of a drain pan part showing one example of providing the sterilizer according to Embodiment 3 to a hand drier. By a jet wind 27 blown to both sides of wet hands 26, water droplets are blown away at once to be a drain water 23 that is collected by a drain pan 24. After that, by the sterilizer 1 according to the present invention provided on the drain pan 24, fungus, bacteria, and the like in the drain water 23 are eliminated.

As described above, according to the hand drier provided with the sterilizer according to Embodiment 3, since microorganisms, fungus, and bacteria in the drain water in the drain pan are sterilized, it is possible to expect a nonconventional prominent effect of achieving an effect of suppressing odor generated from the drain pan.

### Embodiment 4

Fig. 19 is a schematic sectional view showing one example of equipping a humidifier with the sterilizer according to Embodiment 3. As shown in Fig. 19, the humidifier is provided with a water storage tank 29 for storing a water for humidifying the air, a drain pan 24 for collecting a water from a humidifying element 30, a piping 31 for sending a drain water 23 from the drain pan 24 to the water storage tank 29, a piping 32 for connecting the water storage tank 29 and the humidifying element 30 to each other, and the like.

By sterilizing the water stored in the water storage tank 29 at regular intervals by the sterilizer provided on the drain pan 24, the water is always in a sterilized state to make it possible to suppress fungus generation in the water tank 29, the humidifying element 30, the drain pan 24, and the like.

According to the humidifier according to Embodiment 4 that is equipped with the sterilizer, though there has been a problem that fungus are easily generated in parts in which moisture tends to be accumulated in the humidifier, particularly in the humidifying element, drain pan, and the like, it is possible to expect a nonconventional prominent effect of achieving an effect of suppressing microorganisms, fungus, and bacteria since the humidifier is sterilized.

While the present invention has been shown and described with reference to certain exemplary embodiments thereof, it will be understood by those skilled in the art that various changes in form and details may be made therein without departing from the scope of the invention as defined by the appended claims.

## Claims

1. A sterilization method for a water to be treated, the method comprising:
sterilizing the water by applying a high voltage pulse to a pair of discharge electrodes (6), comprising a high voltage electrode (2) whose lateral surface is covered with an insulator (4) and whose exposed tip (2a) is flat and is either
a) on the same plane as a tip part (4a) of the insulator (4), or
b) is recessed from the tip part of the insulator (4a), or
c) wherein the inter-electrode distance is 1 to 20mm, and wherein a range of ratio of a tip part (2a) of the high voltage electrode projected from a tip part (4a) of the insulator covering the high voltage electrode with respect to the inter-electrode distance is within 0 to 0.1,
and a ground electrode (3) opposed to the high voltage electrode (2) with an inter-electrode distance (D), in the water so that dielectric breakdown occurs and bubbles (10) are generated in the water to cause a jet (11) that is directed in a vertical, downward direction from the high voltage electrode to the ground electrode (3), **characterized by**
further providing a dielectric cylinder (13) between the insulator covering the high voltage electrode and the ground electrode for guiding a flow of the jet.

2. The sterilization method according to claim 1, further comprising adding as an additive at least one of acetic acid and carboxylic acid having a hydrophilic residue other than a carboxylic group, to the water,
wherein the hydrophilic residue represents -OH, -NH₂ (primary amine), -NH-(secondary amine), -N<(tertiary amine), -C(O)NH- (peptide bond), -C(O)NH₂ (primary amide), (-C(O))₂NH (secondary amide), (-C(O))₃N (tertiary amide), -O-, -SO₃H, -PO₄H, -F, -NO₂, -S(O)-, or -CN.

3. A sterilizer comprising:
at least one pair of discharge electrodes (6) disposed in a treatment tank (7) storing a water to be treated (8), the pair of discharge electrodes including a high voltage electrode (2) whose lateral surface is covered with an insulator (4) and whose exposed tip (2a) is flat and is either
a) on the same plane as a tip part (4a) of the insulator (4), or
b) is recessed from the tip part of the insulator (4a), or
c) wherein the inter-electrode distance is 1 to 20mm, and wherein a range of ratio of a tip part (2a) of the high voltage electrode projected from a tip part (4a) of the insulator covering the high voltage electrode with respect to the inter-electrode distance is within 0 to 0.1,
and a ground electrode (3) opposed to the high voltage electrode with an inter-electrode distance (D), and
a power source (9) for applying a high voltage pulse to the discharge electrodes,
wherein the water is sterilized by applying the high voltage pulse so that dielectric breakdown occurs and bubbles (10) are generated in the water to cause a jet (11) that is directed in a vertical, downward direction from the high voltage electrode to the ground electrode (3), **characterized by**
further comprising a dielectric cylinder (13) provided between the insulator covering the high voltage electrode and the ground electrode for guiding a flow of the jet.

4. The sterilizer according to claim 3, wherein a negative high voltage pulse is applied to the high voltage electrode.

5. The sterilizer according to any one of claims 3 or 4, wherein the insulator is formed from a heat resistant material having a softening temperature and a decomposition temperature, and
wherein lower one of the softening temperature and the decomposition temperature is 300°C or more.

6. The sterilizer according to any one of claims 3 to 5, further comprising an additive injection tank (21),
wherein at least one of acetic acid and carboxylic acid having a hydrophilic residue other than a carboxylic group is added as an additive to the water, and
wherein the hydrophilic residue represents -OH, -NH₂ (primary amine), -NH-(secondary amine), -N<(tertiary amine), -C(O)NH- (peptide bond), -C(O)NH₂ (primary amide), (-C(O))₂NH (secondary amide), (-C(O))₃N (tertiary amide), -O-, -SO₃H, -PO₄H, -F, -NO₂, -S(O)-, or -CN.

7. An air conditioner comprising the sterilizer according to any one of claims 4 to 6, to have a function of sterilizing a water (23) in a drain pan (24).

8. A hand drier comprising the sterilizer according to any one of claims 4 to 6, to have a function of sterilizing a water (23) in a drain pan (24).

9. A humidifier comprising the sterilizer according to claims 4 to 6, to have a function of sterilizing a water for humidification and cleaning a humidifying element (30).

## Patentansprüche

1. Sterilisationsverfahren für zu behandelndes Wasser, wobei das Verfahren umfasst:
Sterilisieren des Wassers durch Anlegen eines Hochspannungsimpulses an ein Paar von Entladungselektroden (6), welches eine Hochspannungselektrode (2), deren Seitenfläche mit einem Isolator (4) bedeckt ist und deren freiliegende Spitze (2a) flach ist, und
a) auf der gleichen Ebene wie ein Spitzenabschnitt (4a) von dem Isolator (4) liegt, oder
b) gegenüber dem Spitzenabschnitt von dem Isolator (4a) ausgespart ist, oder
c) wobei der Zwischen-Elektroden-Abstand 1 bis 20 mm beträgt, und wobei ein Bereich von einem Verhältnis von einem Spitzenabschnitt (2a) der Hochspannungselektrode, welcher von einem Spitzenabschnitt (4a) von dem Isolator, welcher die Hochspannungselektrode bedeckt, vorragt, in Relation zum Zwischen-Elektroden-Abstand zwischen 0 und 0,1 beträgt,
und eine Erdungselektrode (3) umfasst, welche in dem Wasser der Hochspannungselektrode (2) mit einem Zwischen-Elektroden-Abstand (D) gegenüberliegt, sodass ein dielektrischer Durchschlag auftritt und in dem Wasser Blasen (10) erzeugt werden, wodurch ein Strahl (11) erzeugt wird, welcher von der Hochspannungselektrode zur Erdungselektrode (3) in einer vertikal und nach unten gerichteten Richtung gerichtet ist, **dadurch gekennzeichnet, dass**
ferner ein dielektrischer Zylinder (13) zwischen dem Isolator, welcher die Hochspannungselektrode bedeckt, und der Erdungselektrode bereitgestellt wird, um eine Strömung des Strahls zu leiten.

2. Sterilisationsverfahren nach Anspruch 1, ferner umfassend ein Hinzufügen von Ethansäure und/oder Carboxylsäure, welche eine wasserabweisende Eigenschaft hat, welche sich von einer Carboxylgruppe unterscheidet, als Zusatzmittel in das Wasser,
wobei die wasserabweisende Eigenschaft -OH, -NH₂ (primäres Amin), -NH- (sekundäres Amin), -N< (tertiäres Amin), -C(O)NH- (Peptidbindung), -C(O)NH₂ (primäres Amid), (-C(O))₂NH (sekundäres Amid), (-C(O))₃N (tertiäres Amid), -O-, -SO₃H, -PO₄H, -F, -NO₂, -S(O)- oder -CN darstellt.

3. Sterilisator, umfassend:
zumindest ein Paar von Entladungselektroden (6), welche in einem Behandlungsbehälter (7) zum Aufnehmen von zu behandelndem Wasser (8) angeordnet sind, wobei das Paar von Entladungselektroden eine Hochspannungselektrode (2), deren Seitenfläche mit einem Isolator (4) bedeckt ist, und deren freiliegende Spitze (2a) flach ist, und
a) auf der gleichen Ebene wie ein Spitzenabschnitt (4a) von dem Isolator (4) liegt, oder
b) gegenüber dem Spitzenabschnitt von dem Isolator (4a) ausgespart ist, oder
c) wobei der Zwischen-Elektroden-Abstand 1 bis 20 mm beträgt, und wobei ein Bereich von einem Verhältnis von einem Spitzenabschnitt (2a) der Hochspannungselektrode, welcher von einem Spitzenabschnitt (4a) von dem Isolator, welcher die Hochspannungselektrode bedeckt, vorragt, in Relation zum Zwischen-Elektroden-Abstand zwischen 0 und 0,1 beträgt,
und eine Erdungselektrode (3) umfasst, welche der Hochspannungselektrode mit einem Zwischen-Elektroden-Abstand (D) gegenüberliegt, und
eine Leistungsquelle (9) zum Anlegen von einem Hochspannungsimpuls an die Entladungselektroden,
wobei das Wasser sterilisiert wird, indem der Hochspannungsimpuls derart angelegt wird, dass ein dielektrischer Durchbruch auftritt und in dem Wasser Blasen (10) erzeugt werden, wodurch ein Strom (11) erzeugt wird, welcher von der Hochspannungselektrode zur Erdungselektrode (3) in einer vertikal und nach unten gerichteten Richtung ausgerichtet ist, **dadurch gekennzeichnet, dass**
ferner ein dielektrischer Zylinder (13) umfasst ist, welcher zwischen dem Isolator, welcher die Hochspannungselektrode bedeckt, und der Erdungselektrode bereitgestellt ist, zum Leiten einer Strömung des Strahls.

4. Sterilisator nach Anspruch 3, bei welchem an die Hochspannungselektrode ein negativer Hochspannungsimpuls angelegt ist.

5. Sterilisator nach Anspruch 3 oder 4, bei welchem der Isolator aus einem wärmewiderstandsfähigen Material ausgebildet ist, welches eine Erweichungstemperatur und eine Zersetzungstemperatur hat, und
wobei eine niedrigere Temperatur aus der Erweichungstemperatur und der Zersetzungstemperatur gleich 300 °C oder mehr beträgt.

6. Sterilisator nach einem der Ansprüche 3 bis 5, ferner umfassend einen Zusatzmittel-Zufuhrbehälter (21),
wobei Ethansäure und/oder Carboxylsäure, welche eine wasserabweisende Eigenschaft hat, welche sich von einer Carboxylgruppe unterscheidet, dem Wasser als ein Zusatzmittel hinzugefügt ist,
wobei die wasserabweisende Eigenschaft -OH, -NH₂ (primäres Amin), -NH- (sekundäres Amin), -N< (tertiäres Amin), -C(O)NH- (Peptidbindung), -C(O)NH₂ (primäres Amid), (-C(O))₂NH (sekundäres Amid), (-C(O))₃N (tertiäres Amid), -O-, -SO₃H, -PO₄H, -F, -NO₂, -S(O)- oder -CN darstellt.

7. Klimaanlage, umfassend den Sterilisator nach einem der Ansprüche 4 bis 6, mit einer Funktion zum Sterilisieren von Wasser (23) in einer Ablaufwanne (24).

8. Handtrockner, umfassend den Sterilisator nach einem der Ansprüche 4 bis 6, mit einer Funktion zum Sterilisieren von Wasser (23) in einer Ablaufwanne (24).

9. Luftbefeuchter, umfassend den Sterilisator nach einem der Ansprüche 4 bis 6, mit einer Funktion zum Sterilisieren von Wasser zur Luftbefeuchtung und zum Reinigen eines Luftbefeuchtungselements (30).

## Revendications

1. Procédé de stérilisation pour une eau à traiter, le procédé comprenant :
la stérilisation de l'eau par application d'une impulsion de haute tension à une paire d'électrodes de décharge (6), comprenant une électrode à haute tension (2) dont la surface latérale est recouverte d'un isolant (4) et dont l'extrémité exposée (2a) est plate et est
a) sur le même plan qu'une partie d'extrémité (4a) de l'isolant (4), ou
b) est en retrait par rapport à la partie d'extrémité de l'isolant (4a), ou
c) dans lequel la distance inter-électrodes est de 1 à 20 mm, et dans lequel une plage de rapport d'une partie d'extrémité (2a) de l'électrode à haute tension projetée depuis une partie d'extrémité (4a) de l'isolant recouvrant l'électrode à haute tension à la distance inter-électrodes est de 0 à 0,1,
et une électrode de terre (3) opposée à l'électrode à haute tension (2) avec une distance inter-électrodes (D), dans l'eau de sorte qu'un claquage diélectrique se produise et que des bulles (10) soient générées dans l'eau de manière à provoquer un jet (11) qui est dirigé dans une direction verticale descendante de l'électrode à haute tension vers l'électrode de terre (3), **caractérisé par**
la disposition en outre d'un cylindre diélectrique (13) entre l'isolant recouvrant l'électrode à haute tension et l'électrode de terre pour guider un flux du jet.

2. Procédé de stérilisation selon la revendication 1, comprenant en outre l'ajout en tant qu'additif d'au moins l'un de l'acide acétique et de l'acide carboxylique ayant un résidu hydrophile autre qu'un groupe carboxylique, à l'eau ;
le résidu hydrophile représentant -OH, -NH₂ (amine primaire), -NH- (amine secondaire), -N< (amine tertiaire), -C(O)NH- (liaison peptidique), -C(O)NH₂ (amide primaire), (-C(O))₂NH (amide secondaire), (-C(O))₃N (amide tertiaire), -O-, -SO₃H, -PO₄H, -F, -NO₂, -S(O)-, ou -CN.

3. Stérilisateur comprenant :
au moins une paire d'électrodes de décharge (6) disposées dans une cuve de traitement (7) stockant une eau à traiter (8), la paire d'électrodes de décharge comprenant une électrode à haute tension (2) dont la surface latérale est recouverte d'un isolant (4) et dont l'extrémité exposée (2a) est plate et est
a) sur le même plan qu'une partie d'extrémité (4a) de l'isolant (4), ou
b) est en retrait par rapport à la partie d'extrémité de l'isolant (4a), ou
c) dans lequel la distance inter-électrodes est de 1 à 20 mm, et dans lequel une plage de rapport d'une partie d'extrémité (2a) de l'électrode à haute tension projetée depuis une partie d'extrémité (4a) de l'isolant recouvrant l'électrode à haute tension à la distance inter-électrodes est de 0 à 0,1,
et une électrode de terre (3) opposée à l'électrode à haute tension avec une distance inter-électrodes (D), et
une source d'alimentation (9) pour appliquer une impulsion de haute tension aux électrodes de décharge,
dans lequel de l'eau est stérilisée par application de l'impulsion à haute tension de sorte qu'un claquage diélectrique se produise et que des bulles (10) soient générées dans l'eau de manière à provoquer un jet (11) qui est dirigé dans une direction verticale descendante de l'électrode à haute tension vers l'électrode de terre (3),
**caractérisé en ce qu'**il
comprend en outre un cylindre diélectrique (13) disposé entre l'isolant recouvrant l'électrode à haute tension et l'électrode de terre pour guider un flux du jet.

4. Stérilisateur selon la revendication 3, dans lequel une impulsion à haute tension négative est appliquée à l'électrode à haute tension.

5. Stérilisateur selon l'une quelconque des revendications 3 ou 4, dans lequel l'isolant est formé d'un matériau résistant à la chaleur ayant une température de ramollissement et une température de décomposition, et
dans lequel la plus basse de la température de ramollissement et la température de décomposition est de 300 °C ou plus.

6. Stérilisateur selon l'une quelconque des revendications 3 à 5, comprenant en outre une cuve d'injection d'additif (21),
dans lequel au moins l'un de l'acide acétique et de l'acide carboxylique ayant un résidu hydrophile autre qu'un groupe carboxylique est ajouté en tant qu'additif à l'eau, et
dans lequel le résidu hydrophile représente -OH, -NH₂ (amine primaire), -NH- (amine secondaire), -N< (amine tertiaire), -C(O)NH- (liaison peptidique), -C(O)NH₂ (amide primaire), (-C(O))₂NH (amide secondaire), (-C(O))₃N (amide tertiaire), -O-, -SO₃H, -PO₄H, -F, -NO₂, -S(O)-, ou -CN.

7. Climatiseur comprenant le stérilisateur selon l'une quelconque des revendications 4 à 6, de manière à avoir une fonction de stérilisation d'eau (23) dans un bac de récupération (24).

8. Sèche-main comprenant le stérilisateur selon l'une quelconque des revendications 4 à 6, de manière à avoir une fonction de stérilisation d'eau (23) dans un bac de récupération (24).

9. Humidificateur comprenant le stérilisateur selon les revendications 4 à 6, de manière à avoir une fonction de stérilisation d'eau pour humidification et nettoyage d'un élément d'humidification (30).
